# EUROPÄISCHE PATENTANMELDUNG

(11) **EP 1 306 240 A2**
(43) Veröffentlichungstag der Anmeldung: **02.05.2003**
(21) Anmeldenummer: 02017169.0
(22) Anmeldetag: 31.07.2002
(51) Int. Cl.: B60H 1/00

(54) **Luftstromsteuereinrichtung**

(30) Priorität: 24.10.2001 DE 10152597
(71) Anmelder: Behr GmbH & Co., 70469 Stuttgart (DE)
(72) Erfinder: Komowski, Michael, Dipl.-Ing., 70619 Stuttgart (DE)

(57) **Zusammenfassung**

Die vorliegende Erfindung betrifft eine Luftstromsteuereinrichtung (1), insbesondere in einer Heizungs-, Lüftungs- oder Klimaanlage für den Innenraum eines Fahrzeugs, mit einer Steuerklappe (3), die in einem Umlenkraum (2) um eine Drehachse (4) drehverstellbar gelagert ist, wobei drei separate Luftkanäle (9,10,11) bezüglich der Drehachse (4) im wesentlichen radial in den Umlenkraum (2) einmünden.

Um eine preiswerte Ausführungsform mit einer leichtgängigen Steuerklappe (3) zu erhalten, weist die Steuerklappe (3) drei Steuerwände (7,19) auf und ist zwischen einer ersten Endstellung und einer zweiten Endstellung drehverstellbar, wobei an einer der Steuerklappe (3) zugewandten Wand (5,6) des Umlenkraums (2) Anschlagleisten (12,13) zur Steuerklappe (3) hin vorstehen, an denen wenigstens zwei der Steuerwände (7,19) in den Endstellungen der Steuerklappe (3) in der jeweiligen Drehrichtung (14) zur Anlage kommen.

## Beschreibung

Die Erfindung betrifft eine Luftstromsteuereinrichtung, insbesondere in einer Heizungs-, Lüftungs- oder Klimaanlage für den Innenraum eines Fahrzeugs, mit den Merkmalen des Oberbegriffs des Anspruchs 1.

Eine derartige Luftstromsteuereinrichtung ist beispielsweise aus der DE 38 05 168 A1 bekannt und umfaßt eine Steuerklappe, die in einem Umlenkraum um eine Drehachse drehverstellbar gelagert ist. In diesen Umlenkraum münden vier voneinander unabhängige, also separate Luftkanäle bezüglich der Drehachse der Steuerklappe im wesentlichen radial ein. Die Steuerklappe ist hierbei als Doppelflügelklappe ausgebildet, die zwei im wesentlichen rechteckige, ebene Klappenflügel aufweist, die zueinander parallel verlaufen und bezüglich der Drehachse der Steuerklappe in unterschiedlichen Abständen sowie an entgegengesetzten Seiten angeordnet sind. Die Steuerklappe ist zumindest um 360° drehbar und kann eine über einen der Kanäle zugeführten Luftströmung je nach Klappenstellung auf einen oder mehrere der drei anderen Kanäle umlenken. Die Klappenflügel besitzen an ihren außenliegenden Endkanten jeweils eine Schaumstoffdichtung, die an einer sich parallel zur Schwenkachse erstreckenden Innenwand des Umlenkraums radial dichtend zur Anlage kommt. Diese Schaumstoffdichtungen stehen somit im wesentlichen permanent mit der Innenwand des Umlenkraums in Kontakt, wodurch die Steuerklappe relativ schwergängig verstellbar ist. Bei einer Steuerklappe, die mit Hilfe eines Aktuators angetrieben ist, muß dieser Aktuator dementsprechend leistungsfähig dimensioniert sein.

Aus der DE 197 16 835 A1 ist eine Luftstromsteuereinrichtung bekannt, bei der die Steuerklappe als Trommelklappe ausgebildet ist. Um in einer Endstellung der Steuerklappe einen in den Umlenkraum einmündenden Kanal abzudichten, ist eine Dichtung im Bereich des Umlenkraums fest mit einer sich parallel zur Schwenkachse erstreckenden Innenwand des Umlenkraums verbunden und derart angeordnet, daß die Steuerklappe in der genannten Endstellung an dieser Dichtung zur Anlage kommt. Durch diese Bauweise wird eine Reibung der Dichtung an der Wand bei der Annäherung an die Endstellung vermieden.

Die EP 0 865 945 A1 zeigt eine weitere Luftstromsteuereinrichtung, bei der in den Umlenkraum ein Zuluftkanal und drei Abluftkanäle einmünden. Die Steuerklappe weist drei Klappenflügel auf, die mit den drei Abluftkanälen zusammenwirken. Zwei der Klappenflügel erstrecken sich bezüglich der Drehachse der Steuerklappe im wesentlichen radial und sind um 180° zueinander versetzt angeordnet. Der dritte Klappenflügel erstreckt sich in Drehrichtung der Steuerklappe und ist an seinen axialen Enden über Seitenwangen gehaltert. Dichtungselemente, die ein dichtes Verschließen wenigstens eines der Abluftkanäle unterstützen, sind nicht vorgesehen.

Es besteht das Bedürfnis, die in den Umlenkraum einmündenden Kanäle mit Hilfe der Steuerklappe relativ dicht verschließen zu können, um dadurch Fehlströmungen und die Ausbildung störender Strömungsgeräusche zu verhindern. Sofern die Dichtelemente bei einer Drehverstellung der Steuerklappe an einer Wand des Umlenkraums und an der Steuerklappe in Kontakt stehen, wird die Steuerklappe aufgrund von Reibungseffekten relativ schwergängig. Um diese Schwergängigkeit zu kompensieren, muß ein gegebenenfalls vorgesehenes Antriebsglied entsprechend groß dimensioniert werden, wodurch der Herstellungsaufwand für die Luftstromsteuereinrichtung relativ hoch ist.

Die vorliegende Erfindung beschäftigt sich mit dem Problem, für eine Luftstromsteuereinrichtung der eingangs genannten Art eine Ausführungsform anzugeben, bei der die Steuerklappe besonders leichtgängig ausgestaltet werden kann und die dennoch relativ preiswert herstellbar ist.

Dieses Problem wird erfindungsgemäß durch eine Luftstromsteuereinrichtung mit den Merkmalen des Anspruchs 1 gelöst. Vorteilhafte Ausgestaltungen sind Gegenstand der abhängigen Ansprüche.

Die Erfindung beruht auf dem allgemeinen Gedanken, an einer der Steuerklappe zugewandten Wand des Umlenkraums erste und zweite Anschlagleisten auszubilden, die zur Steuerklappe hin vorstehen und an denen wenigstens zwei der Steuerwände in zwei Endstellungen der Steuerklappe in der jeweiligen Drehrichtung zur Anlage kommen. Durch diese Bauweise kann die Steuerklappe besonders einfach so konzipiert werden, daß sie während einer Drehverstellung zwischen ihren beiden Endstellungen keinen Kontakt mit der Wand aufweist, so daß die Verstellbewegung der Steuerklappe relativ reibungsarm ist und insbesondere mit einem relativ preiswerten Antriebsglied realisierbar ist. Die Abdichtung zwischen den Steuerwänden der Steuerklappe und den Kanälen erfolgt dabei durch die in Drehrichtung der Steuerklappe erfolgende Anlage der Steuerwände an den genannten Anschlagleisten. Die erwünschte Dichtwirkung kann dabei durch eine entsprechende Formgebung und Materialauswahl relativ preiswert realisiert werden.

Bei einer besonders vorteilhaften Weiterbildung können die Anschlagleisten Innenwandanschlagleisten, die von einer sich parallel zur Drehachse erstreckenden Innenwand radial abstehen, und Seitenwandanschlagleisten umfassen, die von einer sich quer zur Drehachse erstreckenden Seitenwand axial abstehen. Zweckmäßig können dann die Innenwandanschlagleisten an ihren axialen Enden durch die Seitenwandanschlagleisten bezüglich der Drehachse der Steuerklappe etwa in radialer Richtung verlängert sein. Durch diese Weiterbildung kommen die betreffenden Steuerwände in der jeweiligen Endstellung im wesentlichen entlang ihres gesamten Umfangs dichtend an den Anschlagleisten zur Anlage, wodurch sich eine besonders effektive Abdichtung erzielen läßt. Bei dieser Ausführungsform kann somit auch an den axialen Enden der Seitenwände eine Abdichtung realisiert werden, die grundsätzlich erst bei Erreichen der jeweiligen Endstellung einen körperlichen Kontakt zwischen der betreffenden Steuerwand und der jeweiligen Anschlagleiste erfordert. Dementsprechend läßt sich diese Verbesserung der Dichtungswirkung ohne zusätzliche Reibung während der Drehverstellung der Steuerklappe realisieren.

Eine minimale Reibung für die Steuerklappe während ihrer Drehverstellungen kann dann realisiert werden, wenn die Steuerwände für die Drehverstellung der Steuerklappe axiales Spiel gegenüber sich quer zur Drehachse erstreckenden Seitenwänden des Umlenkraums und/oder radiales Spiel gegenüber einer sich parallel zur Drehrichtung erstreckenden Innenwand des Umlenkraums aufweisen.

Bei einer besonderen Ausführungsform können sich die Steuerwände jeweils in Drehrichtung erstrecken und an ihren axialen Enden über Seitenwangen an einem zentralen Schaft der Steuerklappe angebracht sein. Bei dieser Ausführungsform ist die Steuerklappe somit nach Art eines Drehschiebers ausgebildet.

Bei einer alternativen Ausführungsform können sich die Steuerwände jeweils in radialer Richtung erstrecken und radial innen an einem zentralen Schaft der Steuerklappe angebracht sein. Bei dieser Ausführungsform ist die Steuerklappe nach Art einer Dreiflügelklappe mit Y-Querschnitt ausgebildet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- **Fig. 1 bis 3**: jeweils eine Schnittansicht auf eine erfindungsgemäße Luftstromsteuereinrichtung bei einer ersten Ausführungsform und bei verschiedenen Drehstellungen einer Steuerklappe,
- **Fig. 4 bis 7**: jeweils eine Schnittansicht auf die Luftstromsteuereinrichtung nach Erfindung ebenfalls bei verschiedenen Drehstellungen der Steuerklappe, jedoch bei einer anderen Ausführungsform.

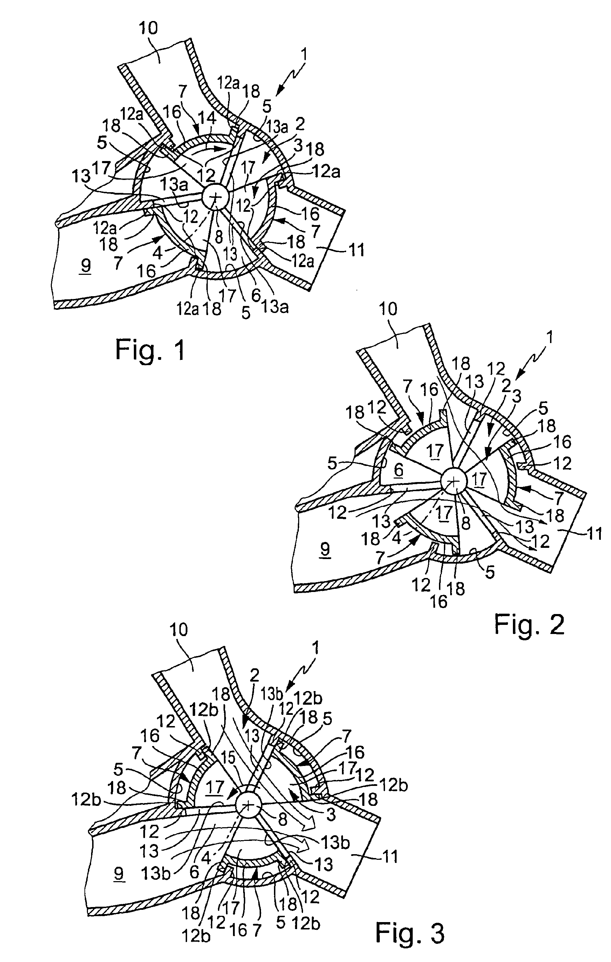

Entsprechend den Fig. 1 bis 7 weist eine Luftstromsteuereinrichtung 1, insbesondere in einer Heizungs-, Lüftungs- oder Klimaanlage für den Innenraum eines Fahrzeugs, einen hier im wesentlichen zylindrisch ausgebildeten Umlenkraum 2 auf, in dem eine Steuerklappe 3 um eine Drehachse 4 drehverstellbar gelagert ist. Die Drehachse 4 verläuft hier senkrecht zur Zeichnungsebene sowie koaxial zur Zylinderachse des Umlenkraums 2. Eine der Steuerklappe 3 zugewandte Wand des Umlenkraums 2 weist eine sich parallel zur Drehachse 4 erstreckende Innenwand 5 sowie zwei sich quer zur Drehachse 4 erstreckende Seitenwände 6 auf. Bei der hier gezeigten Ausführungsform ist die Innenwand 5 im wesentlichen zylindrisch ausgebildet, während die Seitenwände 6 im wesentlichen eben sind. Durch die gewählte Schnittdarstellung ist nur eine der beiden Seitenwände 6 erkennbar.

Die Steuerklappe 3 weist drei Steuerwände 7 auf, die an einem zentralen Schaft 8 der Steuerklappe 3 angebracht sind. Die Steuerklappe 3 ist mit ihrem Schaft 8 an dessen axialen Enden in den Seitenwänden 6 gelagert. In den Umlenkraum 2 münden drei Luftkanäle ein, nämlich ein erster Luftkanal 9, ein zweiter Luftkanal 10 und ein dritter Luftkanal 11 ein.

An der Innenwand 5 des Umlenkraums 2 sind Innenwandanschlagleisten 12 ausgebildet, die radial nach innen vorstehen und sich parallel zur Drehachse 4 der Steuerklappe 3 erstrecken. An ihren axialen Enden sind diese Innenwandanschlagleisten 12 durch Seitenwandanschlagleisten 13 verlängert, die an der jeweils angrenzenden Seitenwand 6 ausgebildet sind, von dieser axial nach innen abstehen und sich bezüglich der Drehachse 4 im wesentlichen radial bis zum Schaft 8 der Steuerklappe 3 erstrecken. Dementsprechend bilden die Innenwandanschlagleisten 12 zusammen mit den daran lückenlos anschließenden Seitenwandanschlagleisten 13 in einem Längsschnitt ein C-förmiges Profil, das radial innen am Schaft 8 der Steuerklappe 3 endet.

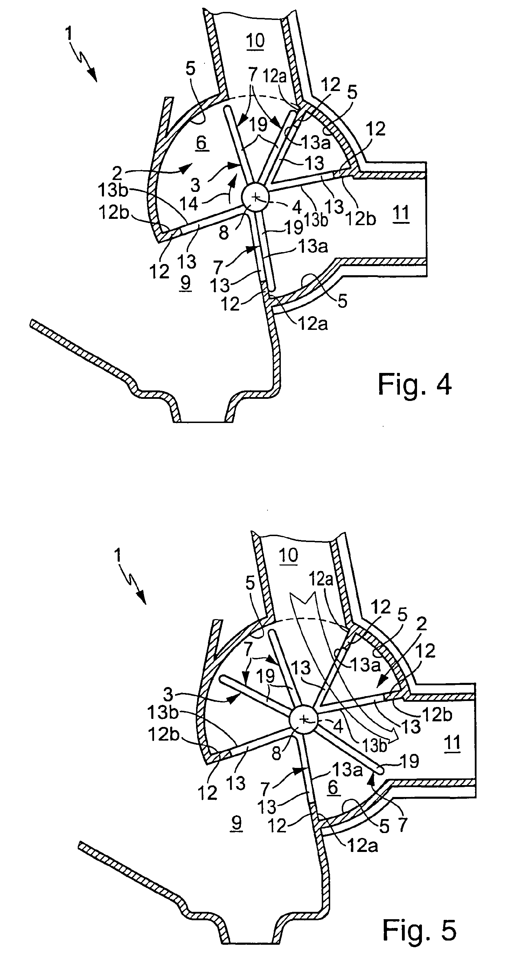

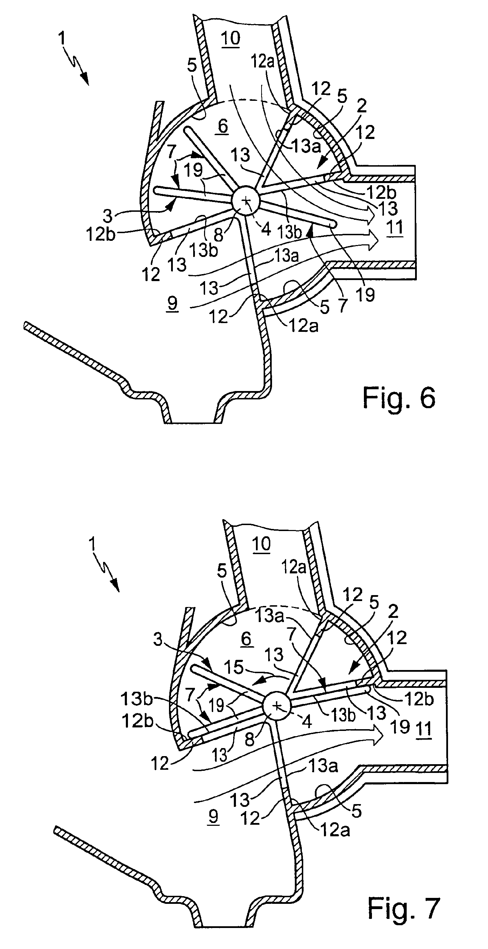

Bezüglich einer in Fig. 1 und in Fig. 4 durch einen Pfeil 14 symbolisierten ersten Drehrichtung, die hier im Uhrzeigersinn verläuft, bilden die Anschlagleisten 12 und 13 erste Innenwandanschlagleisten 12a und erste Seitenwandanschlagleisten 13a, die zusammen eine erste Endstellung für die Steuerklappe 3 definieren. In entsprechender Weise bilden die Anschlagleisten 12 und 13 bezüglich einer in Fig. 3 und in Fig. 7 durch einen Pfeil 15 symbolisierten anderen, entgegengesetzten Drehrichtung, die hier entgegen dem Uhrzeigersinn verläuft, zweite Innenwandanschlagleisten 12b und zweite Seitenwandanschlagleisten 13b, die zusammen eine zweite Endstellung für die Steuerklappe 3 definieren.

Bei der Ausführungsform gemäß den Fig. 1 bis 3 sind die Steuerwände 7 jeweils als Drehschieberflügel ausgebildet und werden im folgenden mit 16 bezeichnet. Dementsprechend erstrecken sich diese Steuerwände 16 jeweils in Drehrichtung 14 bzw. 15, wobei sie an ihren axialen Enden über Seitenwangen 17 am Schaft 8 angebracht sind. Die Steuerwände 16 weisen bezüglich der Drehrichtung 14 bzw. 15 jeweils ein vorderes Ende und ein hinteres Ende auf, wobei an diesen Enden jeweils eine radial nach außen vorstehende Endkante 18 an den Steuerwänden 16 ausgebildet ist. Diese Endkanten 18 erstrecken sich dabei parallel zur Drehachse 4 über die gesamte axiale Länge der Steuerwände 16.

Bei der hier gezeigten Ausführungsform sind die Steuerwände 16 bezüglich der Drehrichtung 14 bzw. 15 symmetrisch angeordnet. Zweckmäßig sind die drei Steuerwände 16 in der Drehrichtung 14 bzw. 15 jeweils etwa um 60° voneinander beabstandet und erstrecken sich jeweils etwa über 60°. Jede Steuerwand 16 ist dabei einem der Luftkanäle 9,10,11 zugeordnet.

Die Ausführungsform der Fig. 1 bis 3 arbeitet wie folgt:

In Fig. 1 nimmt die Steuerklappe 3 ihre erste Endstellung ein, in der die Steuerwände 16 mit ihren Endkanten 18 in der ersten Drehrichtung 14 an den ersten Innenwandanschlagleisten 12a dichtend anliegen. Darüber hinaus liegen die Seitenwangen 17 der Steuerwände 16 an den ersten Seitenwandanschlagleisten 13a in der ersten Drehrichtung 14 an. Insgesamt kommen daher die Steuerwände 16 entlang ihres gesamten Längsprofils an den ersten Anschlagleisten 12a und 13a zur Anlage. In der ersten Endstellung der Steuerklappe 3 sind alle drei Luftkanäle 9,10,11 durch die jeweils zugeordneten Steuerwände 16 verschlossen. Von besonderer Bedeutung ist hierbei, daß jede Steuerwand 16 hier gleichzeitig an zwei in Drehrichtung 14 benachbarten Innenwandanschlagleisten 12 zur Anlage kommt. Um gleichzeitig auch an zwei in Drehrichtung 14 benachbarte Seitenwandanschlagleisten 13 zur Anlage kommen zu können, können die Endkanten 18 an ihren axialen Enden durch hier nicht erkennbare Vorsprünge verlängert sein, die sich axial außen an den Seitenwangen 17 radial bis zum Schaft 8 erstrecken und in axialer Richtung von den Seitenwänden 17 abstehen.

In Fig. 3 ist die zweite Endstellung der Steuerklappe 3 wiedergegeben, bei der ihre Steuerwände 16 an den zweiten Anschlagleisten 12b und 13b anliegen. In der zweiten Endstellung sind alle drei Kanäle 9,10,11 vollständig geöffnet, wobei die einzelnen Luftkanäle 9,10,11 durch die Umlenkkammer 2 miteinander kommunizieren können. In Fig. 3 ist beispielhaft eine Strömungsführung wiedergegeben, bei der eine erste Luftströmung über den ersten Luftkanal 9 und eine zweite Luftströmung über den zweiten Luftkanal 10 zugeführt und über den dritten Luftkanal 11 gemeinsam abgeführt werden.

In Fig. 2 ist eine exemplarische Zwischenstellung der Steuerklappe 3 dargestellt, bei der die Mündungsquerschnitte der drei Luftkanäle 9,10,11 jeweils mehr oder weniger geöffnet sind. Der sich dann einstellende Massenstrom ist entsprechend der Drosselwirkung der Steuerklappe 3 entsprechend gegenüber der zweiten Endstellung gemäß Fig. 3 reduziert.

Wie aus den Fig. 1 bis 3 hervorgeht, sind die Steuerwände 16 und die Kanäle 9,10,11 so aufeinander abgestimmt, daß die Kanäle 9,10,11 beim Verstellen der Steuerklappe 3 simultan und gleichmäßig geöffnet bzw. geschlossen werden.

Entsprechend den Fig. 4 bis 7 können die Steuerwände 7 bei einer anderen Ausführungsform als Schwenkflügel ausgebildet sein, die im folgenden mit 19 bezeichnet werden. Diese Steuerwände 19 erstrecken sich bezüglich der Drehachse 4 in radialer Richtung und sind ebenfalls am Schaft 8 der Steuerklappe 3 angebracht. Die drei Steuerwände 19 sind bezüglich des Querschnitts der Steuerklappe 3 Y-förmig angeordnet. In der vorliegenden Ausführungsform folgen die Steuerwände 19 in Umfangsrichtung mit etwa 180°, dann mit etwa 150° und schließlich mit etwa 30° aufeinander.

Die Ausführungsform der Fig. 4 bis 7 arbeitet wie folgt:

In der in Fig. 4 wiedergegebenen ersten Endstellung der Steuerklappe 3 kommen zwei der drei Steuerwände 19 in der ersten Drehrichtung 14 jeweils an den zugeordneten ersten Innenwandanschlagleisten 12a und an den ersten Seitenwandanschlagleisten 13a dichtend zur Anlage, was dadurch erreicht wird, daß die Steuerwände 19 die Innenwandanschlagleisten 12 in radialer Richtung und die Seitenwandanschlagleisten 13 in axialer Richtung überlappen. In dieser ersten Endstellung der Steuerklappe 3 sind die drei Kanäle 9,10,11 jeweils gesperrt.

In Fig. 7 ist die zweite Endstellung der Steuerklappe 3 wiedergegeben, in der wieder zwei Steuerwände 19 in der entgegengesetzten Drehrichtung 15 an den zugeordneten zweiten Innenwandanschlagleisten 12b und an den zweiten Seitenwandanschlagleisten 13b dichtend zur Anlage kommen. In dieser zweiten Endstellung ist der erste Kanal 9 mit dem dritten Kanal 11 verbunden, wobei eine entsprechende Strömung durch einen Pfeil symbolisiert ist. In der zweiten Endstellung ist der zweite Kanal 10 gesperrt.

Die Steuerwände 19 und die Kanäle 9,10,11 sind bei der in den Fig. 4 bis 7 gezeigten Ausführungsform so aufeinander abgestimmt, daß die Steuerklappe 3 entsprechend Fig. 5 eine zwischen den beiden Endstellungen liegende dritte Schaltstellung einnehmen kann, in welcher der erste Kanal 9 gesperrt ist und der zweite Kanal 10 mit dem dritten Kanal 11 verbunden ist. Eine entsprechende Strömung ist auch hier durch einen Pfeil symbolisiert. Beachtenswert ist hierbei, daß der erste Kanal 9 im ganzen Verstellbereich zwischen der ersten Endstellung gemäß Fig. 4 und dieser dritten Schaltstellung gemäß Fig. 5 gesperrt ist. Erst bei Überschreiten der dritten Schaltstellung wird der erste Kanal 9 mehr oder weniger mit dem dritten Kanal 11 verbunden. Im Unterschied dazu wird beim Verstellen zwischen der ersten Endstellung gemäß Fig. 4 und der dritten Schaltstellung gemäß Fig. 5 der zweite Kanal 10 zunehmend geöffnet und mit dem dritten Kanal 11 verbunden. Bei einer weitergehenden Drehverstellung der Steuerklappe 3 wird die Verbindung zwischen dem zweiten Kanal 10 und dem dritten Kanal 11 zwischen der dritten Schaltstellung gemäß Fig. 5 und der zweiten Endstellung gemäß Fig. 7 zunehmend gesperrt. In Fig. 6 ist eine zwischen der dritten Schaltstellung gemäß Fig. 5 und der zweiten Endstellung gemäß Fig. 7 liegende Zwischenstellung wiedergegeben, in der sowohl der erste Kanal 9 als auch der zweite Kanal 10 mehr oder weniger mit dem dritten Kanal 11 verbunden ist. Eine Schaltstellung mit einer direkten Verbindung zwischen dem ersten Kanal 9 und dem zweiten Kanal 10 durch die Umlenkkammer 2 ist bei der Steuerklappe 3 der in den Fig. 4 bis 7 gezeigten Ausführungsform nicht vorgesehen.

Um für die Steuerklappe 3 eine möglichst große Leichtgängigkeit gewährleisten zu können, ist die Steuerklappe 3 zweckmäßig an oder in den Seitenwänden 6 so gelagert, daß ihre Steuerwände 7 ein axiales Spiel gegenüber den Seitenwänden 6 und ein radiales Spiel gegenüber der Innenwand 5 aufweisen.

### Bezugszeichenliste

- 1: Luftstromsteuereinrichtung
- 2: Umlenkraum
- 3: Steuerklappe
- 4: Drehachse von 3
- 5: Innenwand von 2
- 6: Seitenwand von 2
- 7: Steuerwand von 3
- 8: Schaft von 3
- 9: erster Luftkanal
- 10: zweiter Luftkanal
- 11: dritter Luftkanal
- 12: Innnenwandanschlagleiste
- 12a: erste Innenwandanschlagleiste
- 12b: zweite Innenwandanschlagleiste
- 13: Seitenwandanschlagleiste
- 13a: erste Seitenwandanschlagleiste
- 13b: zweite Seitenwandanschlagleiste
- 14: erste Drehrichtung
- 15: zweite Drehrichtung
- 16: Drehschieberflügel-Steuerwand
- 17: Seitenwange von 16
- 18: Endkante von 16
- 19: Schwenkflügel-Steuerwand

## Patentansprüche

1. Luftstromsteuereinrichtung, insbesondere in einer Heizungs-, Lüftungs- oder Klimaanlage für den Innenraum eines Fahrzeugs, mit einer Steuerklappe (3), die in einem Umlenkraum (2) um eine Drehachse (4) drehverstellbar gelagert ist, wobei drei separate Luftkanäle (9,10,11) bezüglich der Drehachse (4) im wesentlichen radial in den Umlenkraum (2) einmünden,
**dadurch gekennzeichnet,**
**daß** die Steuerklappe (3) drei Steuerwände (7,16;7,19) aufweist und zwischen einer ersten Endstellung und einer zweiten Endstellung drehverstellbar ist, wobei an einer der Steuerklappe (3) zugewandten Wand (5,6) des Umlenkraums (2) erste Anschlagleisten (12a,13a) zur Steuerklappe (3) hin vorstehen, an denen wenigstens zwei der Steuerwände (7,16;7,19) in der ersten Endstellung der Steuerklappe (3) in einer ersten Drehrichtung (14) der Steuerklappe (3) zur Anlage kommen, wobei an der Wand (5) außerdem zweite Anschlagleisten (12b,13b) zur Steuerklappe (3) hin vorstehend, an denen wenigstens zwei der Steuerwände (7,16;7,19) in der zweiten Endstellung der Steuerklappe (3) in einer zweiten Drehrichtung (15) der Steuerklappe (3) zur Anlage kommen.

2. Luftstromsteuereinrichtung nach Anspruch 1,
**dadurch gekennzeichnet,**
**daß** die Anschlagleisten (12,13) Innenwandanschlagleisten (12a,12b) aufweisen, die an einer sich parallel zur Drehachse (4) erstreckenden Innenwand (5) des Umlenkraums (2) radial nach innen vorstehen und sich parallel zur Drehachse (4) erstrecken.

3. Luftstromsteuereinrichtung nach Anspruch 1 oder 2,
**dadurch gekennzeichnet,**
**daß** die Anschlagleisten (12,13) Seitenwandanschlagleisten (13a,13b) aufweisen, die an einer sich quer zur Drehachse (4) erstreckenden Seitenwand (6) des Umlenkraums (2) axial nach innen vorstehen und sich im wesentlichen radial zur Drehachse (4) erstrecken.

4. Luftstromsteuereinrichtung nach den Ansprüchen 2 und 3,
**dadurch gekennzeichnet,**
**daß** wenigstens eine der Innenwandanschlagleisten (12a,12b) an wenigstens einem ihrer axialen Enden durch eine der Seitenwandanschlagleisten (13a,13b) etwa in radialer Richtung verlängert ist.

5. Luftstromsteuereinrichtung nach einem der Ansprüche 1 bis 4,
**dadurch gekennzeichnet,**
**daß** die Steuerwände (7,16;7,19) in den Endstellungen im wesentlichen dicht an den zugeordneten Anschlagleisten (12,12a,12b,13,13a,13b) zur Anlage kommen.

6. Luftstromsteuereinrichtung nach einem der Ansprüche 1 bis 5,
**dadurch gekennzeichnet**, d
daß die Steuerwände (7,16;7,19) für die Drehverstellung der Steuerklappe (3) axiales Spiel gegenüber sich quer zur Drehachse (4) erstreckenden Seitenwänden (6) des Umlenkraums (2) und/oder radiales Spiel gegenüber einer sich parallel zur Drehachse (4) erstreckenden Innenwand (5) des Umlenkraums (2) aufweisen.

7. Luftstromsteuereinrichtung nach einem der Ansprüche 1 bis 6,
**dadurch gekennzeichnet,**
**daß** sich die Seitenwände (7,16) jeweils in Drehrichtung (14,15) erstrecken und an ihren axialen Enden über Seitenwangen (17) an einem zentralen Schaft (8) der Steuerklappe (3) angebracht sind.

8. Luftstromsteuereinrichtung nach den Ansprüchen 2 und 7,
**dadurch gekennzeichnet,**
**daß** die den Innenwandanschlagleisten (12,12a,12b) zugeordneten Steuerwände (7,16) bezüglich der Drehrichtung ein vorderes Ende und ein hinteres Ende aufweisen, an denen jeweils eine radial nach außen vorstehende Endkante (18) ausgebildet ist, wobei diese Endkanten (18) in den Endstellungen der Steuerklappe (3) in Drehrichtung (14,15) an den jeweiligen Innenwandanschlagleisten (12,12a,12b) zur Anlage kommen.

9. Luftstromsteuereinrichtung nach Anspruch 7 oder 8,
**dadurch gekennzeichnet,**
**daß** in den Endstellungen der Steuerklappe (3) die Steuerwände (7,16) mit ihren Seitenwangen (17) an den jeweiligen Anschlagleisten (13,13a,13b) in der jeweiligen Drehrichtung (14,15) zur Anlage kommen.

10. Luftstromsteuereinrichtung nach Anspruch 2 und einem der Ansprüche 7 bis 9,
**dadurch gekennzeichnet,**
**daß** die Seitenwangen (17) der den Seitenwandanschlagleisten (13,13a,13b) zugeordneten Steuerwände (7,16) bezüglich der Drehrichtung ein vorderes Ende und ein hinteres Ende aufweisen, an denen jeweils ein axial nach außen abstehender Vorsprung ausgebildet ist, wobei diese Vorsprünge in den Endstellungen der Steuerklappe (3) in Drehrichtung (14,15) an den jeweiligen Seitenwandanschlagleisten (13,13a,13b) zur Anlage kommen.

11. Luftstromsteuereinrichtung nach einem der Ansprüche 7 bis 10,
**dadurch gekennzeichnet,**
**daß** die Steuerwände (7,16) in Drehrichtung (14,15) symmetrisch angeordnet sind.

12. Luftstromsteuereinrichtung nach Anspruch 11,
**dadurch gekennzeichnet,**
**daß** sich die drei Steuerwände (7,16) in Drehrichtung (14,15) jeweils etwa über 60° erstrecken und in Drehrichtung (14,15) jeweils etwa um 60° voneinander beabstandet sind.

13. Luftstromsteuereinrichtung nach einem der Ansprüche 7 bis 12,
**dadurch gekennzeichnet,**
**daß** die Steuerwände (7,16) und die Kanäle (9,10,11) so aufeinander abgestimmt sind, daß die Kanäle (9,10,11) in der ersten Endstellung der Steuerklappe (3) geschlossen und in der zweiten Endstellung geöffnet sind und bei einer Drehverstellung der Steuerklappe (3) von der ersten Endstellung in die zweite Endstellung simultan und gleichmäßig geöffnet werden.

14. Luftstromsteuereinrichtung nach einem der Ansprüche 1 bis 6,
**dadurch gekennzeichnet,**
**daß** sich die Steuerwände (7,19) jeweils in radialer Richtung erstrecken und radial innen an einem zentralen Schaft (8) der Steuerklappe (3) angebracht sind.

15. Luftstromsteuereinrichtung nach Anspruch 14,
**dadurch gekennzeichnet,**
**daß** die Steuerwände (7,19) und die Kanäle (9,10,11) so aufeinander abgestimmt sind, daß in der ersten Endstellung alle drei Kanäle (9,10,11) gesperrt sind, in der zweiten Endstellung der erste Kanal (9) mit dem dritten Kanal (11) verbunden ist, während der zweite Kanal (10) gesperrt ist, und in einer dritten Schaltstellung der zweite Kanal (10) mit dem dritten Kanal (11) verbunden ist, während der erste Kanal (9) gesperrt ist, wobei zwischen der ersten Endstellung und der dritten Schaltstellung der erste Kanal (9) stets gesperrt und der zweite Kanal (10) mehr oder weniger mit dem dritten Kanal (11) verbunden ist, wobei zwischen der dritten Schaltstellung und der zweiten Endstellung der erste Kanal (9) mehr oder weniger mit dem dritten Kanal (11) und der zweite Kanal (10) mehr oder weniger mit dem dritten Kanal (11) verbunden sind.

16. Luftstromsteuereinrichtung nach Anspruch 14 oder 15,
**dadurch gekennzeichnet,**
**daß** die Steuerwände (7,19) in Drehrichtung (15) mit etwa 180°, etwa 150° und etwa 30° aufeinander folgen.
